Europäisches Patentamt

European Patent Office

Office européen des brevets

(19)

(11) Veröffentlichungsnummer : **0 355 474 B1**

# (12) EUROPÄISCHE PATENTSCHRIFT

(45) Veröffentlichungstag der Patentschrift :
**11.11.92 Patentblatt 92/46**

(51) Int. Cl.⁵ : **F01M 11/04, G01F 23/04**

(21) Anmeldenummer : **89113958.6**

(22) Anmeldetag : **28.07.89**

(54) Öleinfüllvorrichgung mit Öleinfüllrohr und Ölmessstab.

(30) Priorität : **25.08.88 DE 3828835**
**21.07.89 DE 3924151**

(43) Veröffentlichungstag der Anmeldung :
**28.02.90 Patentblatt 90/09**

(45) Bekanntmachung des Hinweises auf die
Patenterteilung :
**11.11.92 Patentblatt 92/46**

(84) Benannte Vertragsstaaten :
**DE ES FR GB IT NL SE**

(56) Entgegenhaltungen :
**DE-A- 1 623 930**
**DE-B- 1 028 832**
**FR-A- 2 542 037**
**US-A- 1 520 230**
**US-A- 1 818 295**
**US-A- 2 138 104**

(56) Entgegenhaltungen :
**US-A- 3 033 311**
**US-A- 3 187 936**
**US-A- 4 176 457**
**US-A- 4 331 185**

(73) Patentinhaber : **Iveco Magirus**
**Aktiengesellschaft**
**Schillerstrasse 2 Postfach 27 40**
**W-7900 Ulm/Donau (DE)**

(72) Erfinder : **Neuburger, Hans, Dipl.-Ing. (FH)**
**Kliffstrasse 6**
**W-7901 Dornstadt 1 (DE)**
Erfinder : **Mall, Wolfgang, Dipl.-Ing. (FH)**
**Hirtenhau 9**
**W-7930 Ehingen (DE)**

(74) Vertreter : **Socha, Peter**
**Iveco Magirus AG Postfach 2740**
**Schillerstrasse 2**
**W-7900 Ulm (DE)**

EP 0 355 474 B1

## Beschreibung

Die Erfindung betrifft eine Öleinfüllvorrichtung mit Öleinfüllrohr und Ölmeßstab gemäß Oberbegriff des Patentanspruchs 1.

Aus DE-A-16 23 930 ist ein Öleinfüllrohr mit einem Ölmeßstab bekannt, der mit dem Verschluß integriert ausgebildet ist. Sitzt der Verschluß auf der Öleinfüllrohröffnung, ragt der Ölmeßstab definiert ins Innere des Rohrs bis in den Ölsumpf hinein. Für einen Ölwechsel werden üblicherweise separate Verschlußschrauben im Boden der Ölwanne bzw. des Motors gelöst oder das Öl durch ein separates Absaugrohr oberseitig abgesaugt, wobei das Absaugrohr bei entferntem Ölmeßstab durch das Öleinfüllrohr bis in den Ölsumpf eingeführt werden kann. Die bekanten Öleinfüllvorrichtungen, Ölkontrollen und Ölabsaugeinrichtungen sind vornehmlich in Stahl bzw. bei Befestigung am Chassis des Fahrzeugs mit flexiblen Zwischenstücken aus Gummi oder Metallgliedern gefertigt. Sie bedingen eine große Teilevielfalt und benötigen aufgrund der erforderlichen Verlegung im Gefälle viel Platz und verursachen dadurch unnötig Kosten und Gewicht.

Aus US-A-4 331 185 ist ferner eine Öleinfüllvorrichtung mit Öleinfüllrohr und Ölmeßstab der eingangs genannten Art bekannt, wobei der Ölmeßstab in einem Führungsrohr aufgenommen ist. Das Führungsrohr ist vergleichsweise kompliziert aufgebaut sowie schwierig zu montieren, kann leicht beschädigt werden und dient neben der Führung des flexiblen Ölmeßstabes der Entlüftung der Vorrichtung bei einem Öleinfüllvorgang.

Aufgabe der Erfindung ist die Schaffung einer Öleinfüllvorrichtung der eingangs genannten art, die sehr einfach, kompakt und montagefreundlich aufgebaut ist und nicht nur eine einfache Öleinfüllung und Ölkontrolle ermöglicht, sondern auch eine einfache Ölabsaugung.

Gelöst wird die der Erfindung zugrundeliegende Aufgabe durch die im kennzeichnenden Teil des Anspruches 1 angegebenen Merkmale.

Vorteilhaft weitergebildet wird der Erfindungsgegenstand durch die Merkmale der Unteransprüche 2 bis 12.

Wesen der Erfindung ist die Ausbildung eines Führungsrohres für den Ölmeßstab, welches mit dem Öleinfüllrohr einstückig ausgebildet ist und insbesondere vollständig im Innern des Öleinfüllrohres gelegen ist. Es ist zweckmäßigerweise ein geradliniges Führungsrohr, welches exzentrisch am Innenmantel des Öleinfüllrohres angeordnet ist. Führungsrohr und Öleinfüllrohr sind insbesondere aus Kunststoff ausgebildet. Die Ölabsaugung kann über eine Ölabsaugsonde über das Öleinfüllrohr erfolgen, insbesondere jedoch über das Ölmeßstab-Führungsrohr durch Aufbringung eines entsprechenden Saugverschlusses der Ölabsauganlage, der vergleichsweise kurz ausgebildet sein kann. Es kann also auf die Ölabsaugsonde verzichtet und das Führungsrohr selbst als "Ölabsaugsonde" verwendet werden. Demgegenüber ist das bekannte gebogene Führungsrohr gemäß US-A-4 331 185 nicht für eine Ölabsaugung vorgesehen.

Zweckmäßigerweise ist der Ölmeßstab mit dem Deckel des Öleinfüllrohres (wie an sich bekannt) integriert ausgebildet. Der Deckel steht hierbei in einem abdichtenden Schnappverschluß mit dem Öleinfüllrohr.

Alternativ kann aber auch der Ölmeßstab im Führungsrohr oberseitig abdichtend aufgenommen sein, wobei eine weitere abnehmbare Dunstkappe für die restliche obere Öffnung des Öleinfüllrohres vorgesehen ist. Unterhalb der Dichtungsstelle zwischen Ölmeßstab und Öleinfüllrohr befindet sich eine Ausgleichsöffnung zwischen Führungsrohr und Öleinfüllrohr in einem Mantelbereich des Führungsrohrs. Diese Ausgleichsöffnung sorgt dafür, daß bei vollständig aufgenommenem Ölmeßstab im Führungsrohr sowohl im Führungsrohr als auch im Öleinfüllrohr ein gleicher Ölstand vorgesehen ist. Bei herausgezogenem Ölmeßstab wird der Verschluß der Ölabsaugeinrichtung auf das Führungsrohr derartig aufgesetzt, daß auch die Ausgleichsöffnung verschlossen ist und mithin eine Ölabsaugung durch das Führungsrohr ungestört erfolgen kann. Zur vorgenannten Ausführungsform kann ein zusätzlicher Sicherungsverschluß für das Öleinfüllrohr einschließlich Führungsrohr und Ölmeßstab vorgesehen sein (Schraub-, Schnapp- oder Bajonettverschluß). Zweckmäßigerweise ist der Sicherungsverschluß abschließbar ausgebildet.

Ersichtlich kann durch die Erfindung auf eine separate Ölabsaugsonde verzichtet werden. Insgesamt ergibt sich eine Reduzierung des Teile- und Montageaufwandes und damit eine Kosten- und Gewichtseinsparung. Die Öleinfüllvorrichtung erfordert nur einen geringen Platzbedarf und damit sehr günstige Verlegungs- und Standardisierungsmöglichkeiten.

Die Erfindung wird nachfolgend anhand von Ausführungsbeispielen unter Bezugnahme auf die beigefügte Zeichnung näher beschrieben; es zeigen:

Fig. 1 eine Öleinfüllvorrichtung in einem schematischen Axialschnitt im Bereich des Verschlußdeckels,

Fig. 2 einen querschnitt längs A-A der Fig. 1,

Fig. 3 einen der Fig. 1 entsprechenden Axialschnitt einer anderen Ausführungsvariante, und

Fig. 4 einen Schnitt längs der Linie B-B der Fig. 3.

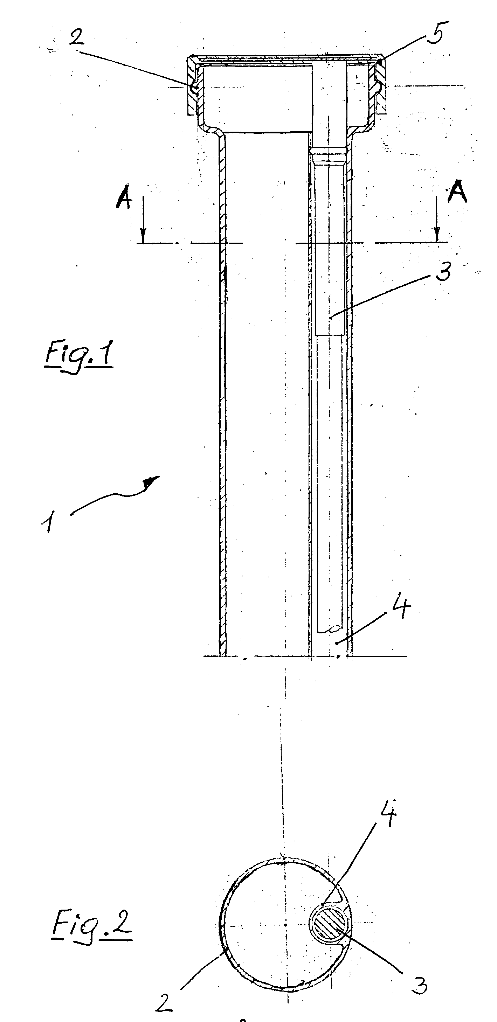

Die in der Zeichnung in zwei Varianten veranschaulichte Öleinfüllvorrichtung (1) umfaßt grundsätzlich ein Öleinfüllrohr (2) und einen Ölmeßstab (3), der in einem Führungsrohr (4) aufgenommen ist, welches seinerseits vollständig im Öleinfüllrohr (2) liegt, und zwar in einer exzentrischen Weise, wie dies insbesondere der Fig. 2 zu entnehmen ist.

Führungsrohr (4) und Öleinfüllrohr (2) sind einstückig aus Kunststoff gefertigt.

Bei herausgezogenem Ölmeßstab (3) kann ein (nicht veranschaulichter) Ölabsaugverschluß auf die obere Öffnung des Führungsrohrs (4) abdichtend aufgesetzt werden und Öl aus dem Führungsrohr (4) abgesaugt werden, welches bis dicht zum Boden des Ölsumpfes reicht. Selbstverständlich kann auch eine Absaugsonde verwendet werden, um eine Ölabsaugung über das Öleinfüllrohr (2) wie nach dem Stand der Technik vorzunehmen. Wird die Öleinfüllvorrichtung (1) am Motor und am Chassis befestigt, wird vorzugsweise ein flexibles Material gewählt. Auch kann die Vorrichtung aus Stahl gefertigt sein.

Bei der in den Fig. 1 und 2 veranschaulichten Öleinfüllvorrichtung (1) ist der Ölmeßstab (3) im Deckel (5) integriert. Das Führungsrohr (4) des Ölmeßstabes (3) und das Öleinfüllrohr (2) werden durch einen Deckel (5) abgedichtet, der insbesondere ein Schnappverschluß ist, welcher auch eine Verschließvorrichtung aufweisen kann. Mehrere Materialkombinationen zwischen Deckel (5), Ölmeßstab (3) und Schnappverschluß sind möglich.

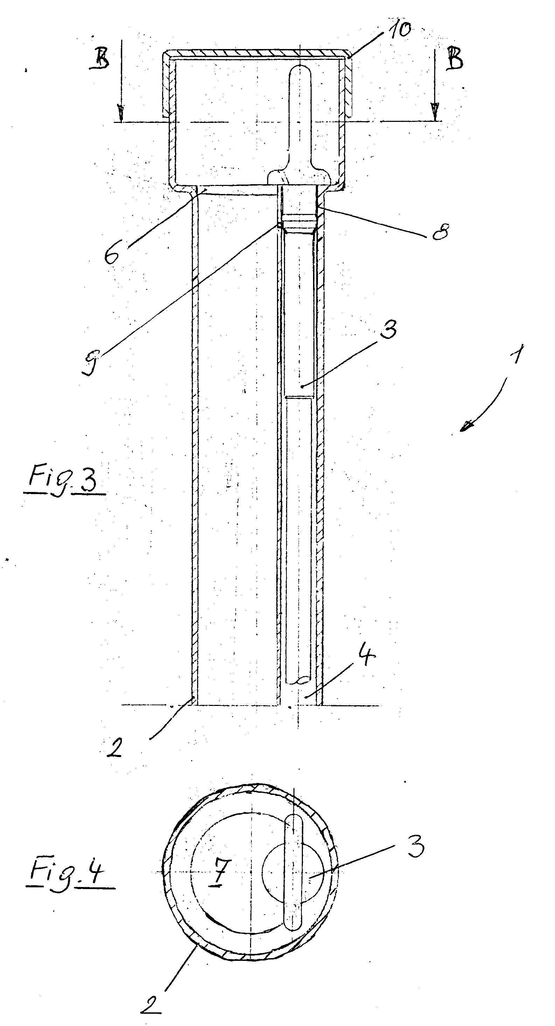

Die in den Fig. 3 und 4 veranschaulichte Ausführungsvariante sieht einen Ölmeßstab (3) vor, der separat das Führungsrohr (4) in seiner vollständig eingesteckten Lage abdichtet, und zwar an seiner obersten im Führungsrohr befindlichen Stelle. Kurz unterhalb der vorgenannten Dichtungsstelle (8) ist im Mantel des Führungsrohres (4) eine Druckausgleichsbohrung bzw. -öffnung (9) zwischen Führungsrohr und Öleinfüllrohr vorgesehen, so daß beim Einschieben des Ölmeßstabes (3) der Ölspiegel im Ölstab-Führungsrohr durch den dicht schließenden Ölmeßstab nicht verändert wird. Die Druckausgleichsbohrung wird bei einem Ölabsaugen vom Anschluß des Absauggerätes verschlossen.

Ferner ist eine zusätzliche Abdichtung in Form eines zusätzlichen Verschlusses (10) für Führungsrohr, Meßstab und Öleinfüllrohr vorgesehen, der ein Schraubverschluß ist und versperrt werden kann. Der zusätzliche Verschluß (10) kann auch als Bajonettverschluß oder als Schnappverschluß ausgebildet sein.

**Patentansprüche**

1. Öleinfüllvorrichtung (1) mit Öleinflüllrohr (2) und Ölmeßstab (3), wobei der Ölmeßstab (3) in einem Führungsrohr (4) aufgenommen ist, dessen bodenseitige Öffnung im Bereich eines Ölsumpfes angeordnet ist, dadurch gekennzeichnet, daß das Führungsrohr (4) einstückig mit dem Öleinfüllrohr (2) ausgebildet ist.

2. Öleinfüllvorrichtung nach Anspruch 1, dadurch gekennzeichnet, daß das Führungsrohr (4) vollständig im Inneren des Öleinfüllrohrs (2) angeordnet ist.

3. Öleinfüllvorrichtung nach Anspruch 2, dadurch gekennzeichnet, daß das geradlinige Führungsrohr (4) am Innenmantel des geradlinigen Öleinfüllrohres (2) exzentrisch angeordnet ist.

4. Öleinfüllvorrichtung nach einem der Ansprüche 1 bis 3, dadurch gekennzeichnet, daß der Ölmeßstab (3) im Deckel (5) des Öleinfüllrohres (2) integriert ausgebildet ist, der mit dem Öleinfüllrohr (2) oberseitig in einen abdichtenden Schnappverschluß bringbar ist.

5. Öleinfüllvorrichtung nach Anspruch 4, dadurch gekennzeichnet, daß der Deckel (5) verschließbar ausgebildet ist.

6. Öleinfüllvorrichtung nach einem der Ansprüche 1 bis 3, dadurch gekennzeichnet, daß der Ölmeßstab (3) im Führungsrohr (4) oberseitig abdichtend aufgenommen und eine abnehmbare Dunstkappe (6) die restliche obere Öffnung (7) des Öleinfüllrohres (2) verschließt, wobei unterseitig im Bereich der Dichtungsstelle (8) zwischen Ölmeßstab (3) und Führungsrohr (4) eine Ausgleichsöffnung (9) zwischen Führungsrohr (4) und Öleinfüllrohr (2) vorgesehen ist.

7. Öleinfüllvorrichtung nach Anspruch 6, dadurch gekennzeichnet, daß ein zusätzlicher Verschluß (10) für das Öleinfüllrohr (2) einschließlich Führungsrohr (4) und Ölmeßstab (3) vorgesehen ist.

8. Öleinfüllvorrichtung nach Anspruch 7, dadurch gekennzeichnet, daß der zusätzliche Verschluß (10) ein Schraub- oder Schnappverschluß oder ein Bajonettverschluß ist.

9. Öleinfüllvorrichtung nach Anspruch 7 oder 8, dadurch gekennzeichnet, daß der zusätzliche Verschluß (10) abschließbar ausgebildet ist.

10. Öleinfüllvorrichtung nach einem der Ansprüche 1 bis 9, dadurch gekennzeichnet, daß das Öleinfüllrohr (2) und Führungsrohr (4) aus Kunststoff ausgebildet sind.

11. Öleinfüllvorrichtung nach einem der Ansprüche 1 bis 10,
dadurch gekennzeichnet,
daß die bodenseitige Öffnung des Führungsrohrs (4) an tiefster Stelle des Ölsumpfes gelegen
ist.

12. Öleinfüllvorrichtung nach einem der Ansprüche 1
bis 11,
dadurch gekennzeichnet,
daß das Führungsrohr (4) bei entferntem Ölmeßstab (3) als Ölabsaugrohr verwendet ist.

**Claims**

1. An oil filling device (1) with an oil filler tube (2) and
an oil dip stick (3), in which the oil dip stick (3) is
accommodated within a guide tube (4), the bottom opening of which is in the region of an oil
sump,
characterized in that
the guide tube (4) and oil filler tube (2) are integral.

2. An oil filling device according to Claim 1,
characterized in that
the guide tube (4) is fully contained within the oil
filler tube (2).

3. An oil filling device according to Claim 2,
characterized in that
the straight guide tube (4) is attached eccentrically to the internal casing of the oil filler tube (2).

4. An oil filling device according to Claims 1 to 3,
characterized in that
the oil dip stick (3) is integrated into the cap (5) of
the oil filler tube (2), and, together with the oil filler
tube (2), may end in a sealing, spring-loaded
catch.

5. An oil filling device according to Claim 4,
characterized in that
the cap (5) can be locked.

6. An oil filling device according to Claims 1 to 3,
characterized in that
the oil dip stick (3) is accommodated in the guide
tube (4) with its upper surface forming a seal and
having a detachable ventilating cap (6) which
seals the remainder of the upper opening (7) of
the oil filler tube (2), whereby there is an equalization opening (9) between the oil filler tube (2)
and the guide tube (4) beneath the sealing point
(8) between the oil dip stick (3) and the guide tube
(4).

7. An oil filling device according to Claim 6,

characterized in that
it has an additional cap (10) for the oil filler tube
(2), inclusive of the guide tube (4) and the oil dip
stick (3).

8. An oil filling device according to Claim 7,
characterized in that
the additional cap (10) is a screw fitting cap,
spring-loaded catch or bayonet catch cap.

9. An oil filling device according to Claim 7 or 8,
characterized in that
the additional cap (10) may be locked.

10. An oil filling device according to one of Claims 1
to 9,
characterized in that
the oil filler tube (2) and guide tube (4) are of plastics material.

11. An oil filling device according to one of Claims 1
to 10,
characterized in that
the lower opening of the guide tube (4) is located
at the lowest point of the oil sump.

12. An oil filling device according to one of Claims 1
to 11,
characterized in that
the guide tube (4) is used as an oil suction tube if
the oil dip stick (3) is removed.

**Revendications**

1. Dispositif de remplissage d'huile (1) avec un tube
de remplissage d'huile (2) et une jauge d'huile (3),
la jauge d'huile (3) étant logée dans un tube de
guidage (4) dont l'ouverture située au niveau du
fond d'une bâche d'huile, caractérisé en ce que le
tube de guidage (4) est en une seule pièce avec
le tube de remplissage d'huile (2).

2. Dispositif de remplissage d'huile selon la revendication 1, caractérisé en ce que le tube de guidage (4) est placé complètement à l'intérieur du
tube de remplissage d'huile (2).

3. Dispositif de remplissage d'huile selon la revendication 2, caractérisé en ce que le tube de guidage (4) rectiligne est prévu de manière excentrée sur l'enveloppe intérieure du tube de remplissage d'huile (2) rectiligne.

4. Dispositif de remplissage d'huile selon l'une des
revendications 1 à 3, caractérisé en ce que la jauge d'huile (3) est intégrée au couvercle (5) du
tube de remplissage d'huile (2), ce tube pouvant être mis en liaison d'encliquetage étanche dans sa partie haute avec le tube de remplissage d'huile (2).

5. Dispositif de remplissage d'huile selon la revendication 4, caractérisé en ce que le couvercle 5 peut être verrouillé.

6. Dispositif de remplissage d'huile selon l'une des revendications 1 à 3, caractérisé en ce que la jauge d'huile (3) est logée de manière étanche en partie haute dans le tube de guidage (4) et un capuchon à vapeur (6), amovible ferme le reste de l'ouverture supérieure (7) du tube de remplissage d'huile (2) et sur sa face inférieure, au niveau du point d'étanchéité (8) entre la jauge d'huile (3) et le tube de guidage (4) il est prévu un orifice de compensation (9) entre le tube de guidage (4) et le tube de remplissage d'huile (2).

7. Dispositif de remplissage d'huile selon la revendication 6, caractérisé par un bouchon supplémentaire (10) pour le tube de remplissage d'huile (2) y compris le tube de guidage (4) et la jauge d'huile (3).

8. Dispositif de remplissage d'huile selon la revendication 7, caractérisé en ce que le bouchon complémentaire (10) présente une liaison à vis ou par encliquetage ou une liaison du type baïonnette.

9. Dispositif de remplissage d'huile selon la revendication 7 ou 8, caractérisé en ce que le bouchon supplémentaire (10) est susceptible d'être verrouillé.

10. Dispositif de remplissage d'huile selon l'une des revendications 1 à 9, caractérisé en ce que le tube de remplissage (2) et le tube de guidage (4) sont en matière synthétique.

11. Dispositif de remplissage d'huile selon l'une des revendications 1 à 10, caractérisé en ce que l'ouverture du côté du fond du tube de guidage (4) se situe au point le plus bas de la bâche d'huile.

12. Dispositif de remplissage d'huile selon l'une des revendications 1 à 11, caractérisé en ce que le tube de guidage (4) est utilisé comme tube d'aspiration d'huile après enlèvement de la jauge d'huile (3).

Fig.1

Fig.2

Fig.3

Fig.4